# EUROPEAN PATENT APPLICATION

(11) **EP 4 807 469 A1**
(43) Date of publication of application: **16.09.2026**
(21) Application number: 25305318.5
(22) Date of filing: 10.03.2025
(51) Int. Cl.: G04B 17/06, G04B 17/22, C01B 32/16, B82Y 15/00, B82Y 30/00, B82Y 40/00, G04B 1/14, G04B 17/04

(54) **HAIRSPRING FOR A HAIRSPRING-BALANCE OSCILLATOR, TIMEPIECE COMPRISING A HAIRSPRING-BALANCE OSCILLATOR AND PROCESS FOR MANUFACTURING A HAIRSPRING**

(71) Applicant: LVMH Swiss Manufactures SA, 2300 La Chaux-de-Fonds (CH)
(72) Inventor: Zagar, Goran, 2300 La Chaux-de-Fonds (CH); Garnier, Maxime, 2300 La Chaux-de-Fonds (CH); Bomal, Enzo, J4N 0G1, Longueuil, QC (CA)
(74) Representative: Plasseraud IP

(57) **Abstract**

A hairspring (12a) for a hairspring-balance oscillator of a timepiece movement, comprises at least one flexible portion, said flexible portion being adapted to bend in a plane perpendicular to an axis (X) and being made of a metamaterial of structured nanotubes (16) of carbon bound in a matrix (16a) of amorphous carbon.

## Description

### TECHNICAL FIELD

The present invention relates to a hairspring for a hairspring-balance oscillator, to a timepiece comprising a hairspring-balance oscillator, and to a process for manufacturing a hairspring.

### BACKGROUND OF THE INVENTION

Timepiece movements typically comprise a regulator, a mechanical oscillator which determines the time base of the timepiece movement. This regulator includes a hairspring associated with an oscillating weight called a balance. This hairspring requires dimensional precision and stability of the thermo-mechanical material parameters, which determine the timekeeping accuracy of the timepiece movement.

EP-A-3 472 674, in the name of the Applicant, describes a hairspring for a timepiece movement comprising at least one flexible portion, said flexible portion being adapted to bend in a plane perpendicular to an axis. The flexible portion is made of a composite material comprising juxtaposed carbon nanotubes forming a forest where nanotubes are generally aligned parallel to the axis, and a matrix of amorphous carbon that is infiltrated in-between the nanotubes of the forest.

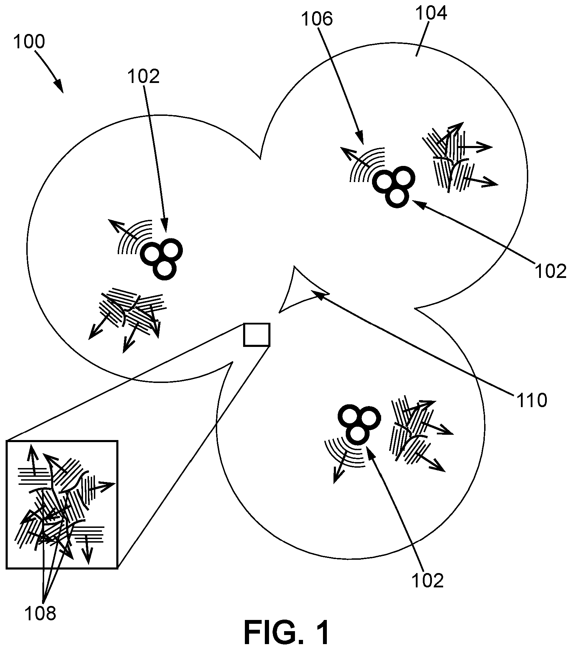

FIG. 1 shows a sketch of the local microstructure of the nanostructured carbon composite material of a hairspring as described in EP-A-3 472 674, as seen perpendicular to the growth direction of the nanotubes. As can be seen on this FIG. 1, the composite material **100** around the carbon nanotubes core **102** typically shows that the infiltrated carbon **104** is locally organized as small imperfect graphitic-like domains or a stack of graphene-like layers **106.** Near the carbon nanotubes core **102,** the domain orientation is mainly radial, and the layers follow the contour of the carbon nanotubes core **102.** With increasing distance from the core **102** however, the domain orientation becomes more disordered. A first consequence of the disorder in the domain orientation is the existence of first voids **108** (or interfaces **108)** in-between the domains. These first voids **108** can be seen as micro-cracks in the material. In addition, second voids **110,** generally larger than the first voids **108,** are created in-between two fronts of the infiltrated carbon **104** that grow and connect between pairs of nearby carbon nanotubes core **102.** These first and second voids **108, 110** influence the characteristics of the hairspring.

The hairspring described in EP-A-3 472 674 can be said to be monolithic (or solid) even, if made from a composite material, since it is made from a material whose microstructure is structured at the nanometric size length scales, so that at the length scales of tens of microns that are relevant for the hairspring geometry, the composite is appearing somewhat porous due to first and second voids **108, 110** yet homogeneous. In other words, the hairspring described in EP-A-3 472 674 can be said monolithic since it is made from a continuous volume of material. "Continuous volume of material" here means that the material has a uniform distribution of the infiltrated carbon nanotubes aligned with the axis throughout the volume of the hairspring geometry and does not have any discontinuity at a length scale comparable to the dimensions of the hairspring or its flexible portion. By "at a length scale comparable to the dimensions of the hairspring or its flexible portion" it is meant that the hairspring or its flexible portion, respectively, does not comprise any discontinuity having at least one dimension equal to or greater than the hundredth, preferably the fiftieth, more preferably the tenth, and still more preferably the half, of the least dimension of the hairspring or its flexible portion, respectively. Especially, the voids in the composite material of this hairspring that remain after incomplete infiltration, are too small to form discontinuities as defined above.

An example of a hairspring is given in document JP-A-2008 116 205. This hairspring is made of a composite material comprising a matrix of graphite and of amorphous carbon, reinforced with carbon nanotubes dispersed in the matrix and aligned in the longitudinal direction of the coil. The nanotubes have a diameter of about 10 nm and a length of about 10 microns. To manufacture the hairspring, a homogeneous mixture is first produced with the nanotubes, graphite, and amorphous carbon, then the mixture is extruded to obtain the shape of the hairspring with the aim of aligning the nanotubes within the length of the coil.

Such a hairspring has many disadvantages:
- the extrusion process does not allow high mechanical precision, resulting in unacceptable timekeeping inaccuracy,
- the orientation of the nanotubes is poorly controlled, since the nanotubes are arranged randomly in the homogeneous mixture,
- the method is complex to implement for ensuring good homogeneity of the material, which leads to regularity in the hairspring,
- it is complex to obtain the desired mechanical properties of the hairspring, because one must adjust the amounts of the mixture very precisely while maintaining homogeneity.

### OBJECTS AND SUMMARY OF THE INVENTION

The present invention is intended to better control the characteristics of a hairspring for a timepiece movement made of a composite material comprising a forest of carbon nanotubes bound in a matrix.

To this end, the invention provides a hairspring for a hairspring-balance oscillator of a timepiece movement, comprising at least one flexible portion, said flexible portion being adapted to bend in a plane perpendicular to an axis and being made of a metamaterial of structured nanotubes of carbon bound in a matrix of amorphous carbon.

According to different embodiments, the hairspring of the invention can include one or several of the following features, taken alone or in combination:
- the nanotubes form a forest of nanotubes, the nanotubes being juxtaposed and generally arranged in parallel to the axis;
- the metamaterial has two-dimension unit cells, preferably only one or two two-dimension unit cells, formed by vertices connected by edges,
- the two-dimension pattern is a uniform tiling;
- each vertex is joined to at least three neighboring vertices by respective edges;
- each vertex is joined to exactly three, four, five, six, eight or twelve neighboring vertices by respective edges;
- each edge is covered by a capping layer, preferably of carbon;
- each edge has a length comprised between 1 µm and 15 µm, preferably between 1 µm and 10 µm, and/or a thickness comprised between 500 nm and 4 µm;
- the hairspring has a height comprised between 50 µm and 400 µm and/or a length comprised between 5 mm and 200 mm;
- the nanotubes have a diameter comprised between 7 and 30 nm and/or a length comprised between 25 µm and 400 µm.

According to another aspect, the invention provides a timepiece movement having a hairspring as described above, in all its combinations.

According to a further aspect, the invention provides a timepiece comprising a timepiece movement as described above, in all its combinations.

According to a further aspect, the invention provides a method of manufacturing a hairspring as described above in all its combinations, comprising the steps of:
a) a growing step during which the forest of nanotubes is grown;
b) an infiltration step, during which the component material of the matrix infiltrates the forest of nanotubes.

During the growing step, the forest of nanotubes can be grown on a substrate, preferably perpendicularly to the substrate, and the infiltration step can be followed by a separation step during which the composite metamaterial is separated from the substrate.

The infiltration step can last up to 6 hours.

### BRIEF DESCRIPTION OF DRAWINGS

Other features and advantages of the invention will be apparent from the following description of several of its embodiments, given as non-limiting examples, with regard to the accompanying drawings.

In the drawings:
FIG. 1 is a schematic view of the microstructure of a composite material comprising carbon nanotubes bound in a matrix;
FIG. 2 is a schematic view of a timepiece comprising a hairspring;
FIG. 3 is a block diagram of the movement of the timepiece of FIG. 2;
FIG. 4 is a schematic view of a hairspring usable in the timepiece of FIG. 2;
FIG. 5 is a perspective view of a portion of the hairspring of FIG. 4;
FIG. 6 highly schematically illustrates the local composition of the metamaterial of the hairspring in the form of a forest of nanotubes, the nanotubes being deliberately enlarged, straightened, disentangled and made parallel for clarity and therefore not represented to scale;
FIG. 7 illustrates a first pattern that the metamaterial of the hairspring can have;
FIG. 8 illustrates a step of the method used to produce the hairspring of FIG. 4;
FIGS. 9 to 20 represent variants of the pattern that the metamaterial of which the hairspring is made, can have.
FIG 21 represents a schematic view of a second example of a hairspring usable in the timepiece of FIG. 2;

### DETAILED DESCRIPTION

In the various figures, the same references denote identical or similar elements.

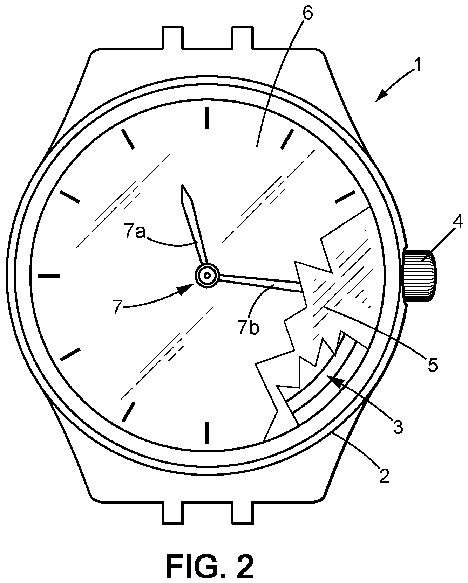

FIG. 2 represents a timepiece **1** such as a watch, comprising:
a case **2,**
a timepiece movement **3** contained in the case **2,**
generally, a winding mechanism **4,**
a dial **5,**
a crystal **6** covering the dial **5,**
a time indicator **7** , for example comprising two hands **7a, 7b** for the hours and minutes respectively, arranged between the crystal **6** and the dial **5** and actuated by the timepiece movement **3.**

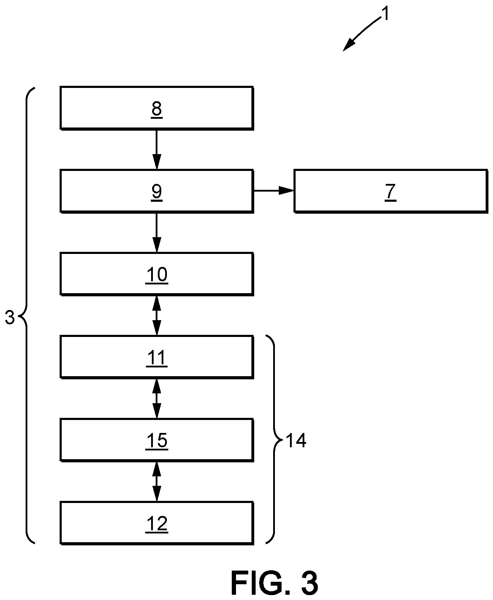

As is schematically represented in FIG. 3, the timepiece movement **3** may for example comprise:
a device **8** for storing mechanical energy, typically a mainspring,
a mechanical transmission **9** driven by the device **8** for storing mechanical energy,
the abovementioned time indicator **7,**
an energy distribution wheel **10** (for example an escapement wheel of a Swiss anchor escapement or similar),
a locking mechanism **11** (for example a Swiss anchor or similar) suitable for sequentially holding and releasing the energy distribution wheel **10,**
a regulator **12,** which is an oscillating mechanism controlling the locking mechanism **11** to move it regularly so that the energy distribution wheel **10** is moved at constant time intervals.

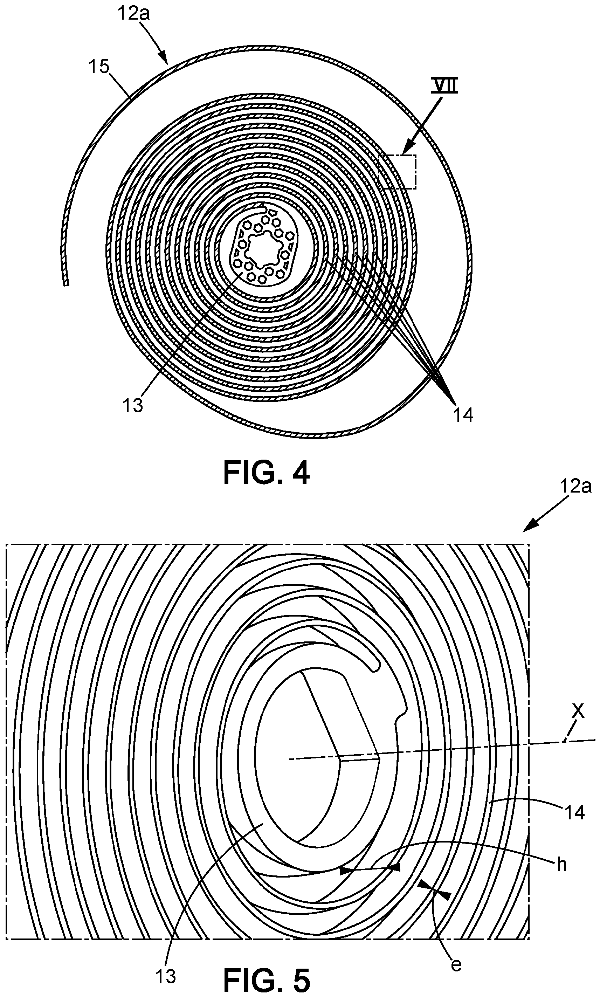

The regulator **12** comprises an oscillating weight, for example a balance (not shown) and a hairspring **12a** (or coil spring) such as the one represented in FIGS. 4 and 5.

The hairspring **12a** may include:
- a central ring **13** intended to be fixed at the center of the balance and rotating with the balance about a central axis **X,**
- several turns **14** winding about the central axis **X,** from the ring **13** to a terminal portion **15** called the "terminal curve".

The terminal portion **15** is attached, usually by a stud (not shown), to a bridge (not shown) on which the balance is pivotally mounted.

The turns **14** and the terminal portion **15** of the hairspring **12a** may have a constant thickness **e** in the plane perpendicular to the central axis **X** and a height **h** parallel to the central axis **X.** The thickness e may for example be several tens of microns, for example from about 10 to 100 microns. The height **h** of the turns **14** and the terminal portion **15** of the hairspring **12a** can be comprised between 50 µm and 400 µm. The total length of the hairspring **12a** may be from about 5 mm to 200 mm, e.g. 100 mm.

The hairspring **12a** is made of a composite metamaterial comprising nanotubes **16** bound in a matrix **16a** of amorphous carbon.

The nanotubes **16** form a forest of nanotubes, which means that the nanotubes **16** are juxtaposed, entangled and all arranged substantially parallel to one another.

Advantageously, the nanotubes **16** are all arranged substantially parallel to the central axis **X,** therefore generally parallel to the central axis **X.** The nanotubes are present throughout the entire mass of the composite metamaterial, with a surface density in the plane perpendicular to the axis **X** that is controlled by the nanotube growth process during the manufacture of the hairspring **12a.** For example, the distance between neighboring nanotubes **16** is comprised between 0 nm - since few nanotubes can form a bundle - preferably 1 nm, and 200 nm, preferably 100 nm. In case nanotubes **16** form bundles, infiltrated carbon does mainly not fill the small spaces and voids within the bundles. However, nanotubes **16** or bundles of nanotubes **16** could be separated from each other by voids that are mainly infiltrated by the amorphous carbon.

The nanotubes **16** are made of carbon.

The nanotubes **16** may advantageously be essentially multi-walled. Optionally, the nanotubes **16** may advantageously be primarily single-walled.

The nanotubes may have a diameter d comprised between 7 and 30 nm. Optionally, the nanotubes may have a diameter d comprised between 2 and 10 nm, preferably between 3 and 7 nm, in particular about 5 nm.

The nanotubes may have a length comprised between 25 and 400 microns. Optionally, the nanotubes may have a length of between 100 and 200 microns, in particular about 150 microns. This length may advantageously correspond to the abovementioned thickness **h** of the turns **14** of the hairspring **12a.**

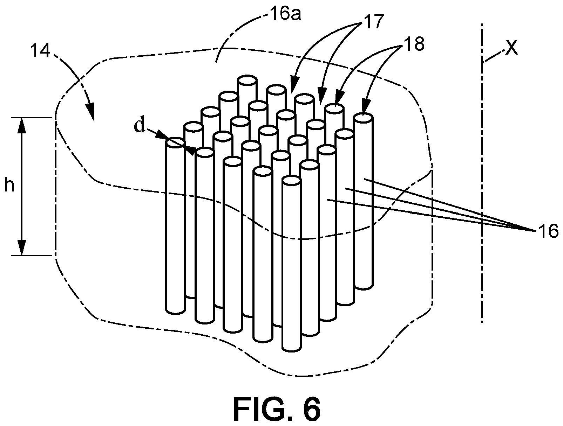

The matrix **16a** may advantageously also be made of carbon. The matrix **16a** is highly schematically represented in FIG. 6. It may advantageously encompass the nanotubes **16,** being present in the gaps **17** between nanotubes **16** and within the inner space **18** of the nanotubes **16.** This matrix **16a** makes it possible to provide cohesion between nanotubes **16** and thereby modify the mechanical properties of the forest of nanotubes **16.**

The hairspring **12a** is made of a metamaterial of nanostructured material. The metamaterial can have a pattern formed by one, two or more unit cells (or tile) defined by vertices **23** connected by edges **24** (or struts), surrounding voids in the metamaterial. The unit cell/s can be repeated to form the pattern. Repetition of the unit cell/s can be regular. In this case the pattern is said to be regular. On the other hand, repetition of the unit cell/s can be irregular and then the pattern is said to be irregular. The pattern can also be defined as irregular if is comprised of unit cells which are all different from the others. The edges **24** can be straight or even curved. The pattern is preferably a two-dimension pattern, included in a plane perpendicular to the central axis **X** of the hairspring **12a.**

The edges **24** can all have the same length. The length of each edge **24** can be comprised between 1 µm and 15 µm, preferably between 1 µm and 10 µm. The thickness of each edge **24** can be comprised between 500 nm and 4 µm. The height of each edge **24** is preferably equal to the height **h** of the hairspring **12a.** Each edge **24** can be covered by a coating layer. The coating layer may consist of carbon. The thickness of the coating layer can be comprised between 5 nm and 500 nm. Preferably the ratio of the length of each edge **24** on the least dimension of the hairspring **12a** is comprised between 4 and 100, preferably between 2 and 10.

However, the edges **24** can have different lengths. For example, a first group of edges **24** can have a first length, whereas a second group of edges **24** have a second length, different from the first length.

The vertices **23** can be spot like, with a diameter larger than the thickness of the edges **24** intersecting at the vertices **23.** The diameter of each vertex **23** can be comprised between 1/5 and 1/4 of a neighboring edge length. Alternatively, each vertex **23** can be spot like, with a diameter equal to the thickness of the edges **24** intersecting at said vertex **23.**

The pattern formed by the vertices **23** and edges **24** can be regular (or periodic). Alternatively, the pattern is semiregular or even irregular, especially in case the pattern is the result of a computer-aided optimization or based on algorithms that generate unstructured two-dimension meshes or grids. The pattern formed by the vertices **23** and edges **24** may look random. The pattern can also be aperiodic.

By replacing the solid hairspring geometry with a unit cell patterned geometry, where unit cells have dimensions which are much smaller than the overall dimensions of the hairspring **12a,** nanotube forests are confined in small places so that they are better and more uniformly infiltrated throughout the hairspring **12a.** Thus, the thermo-mechanical properties of the hairspring **12a** can be less sensitive to the intrinsic effects emerging form the forest randomness in the prior art. Further, better controlled locations of the nanotube forests and infiltration in a narrow space decreases the variation of the local mechanical properties of the nanostructured carbon material and with this allows better control of the hairspring thermo-mechanical properties directly via the design of the unit cell/s.

In the following different patterns **P1-P13** are described.

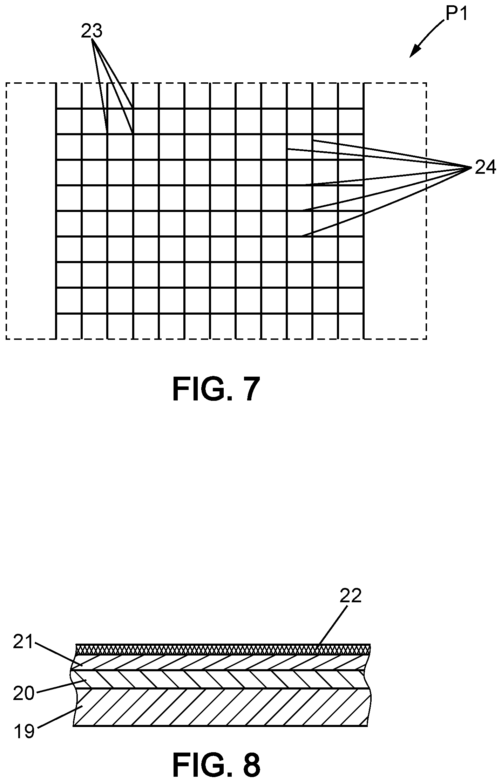

The pattern **P1** shown in FIG. 7 is comprised of identical, adjacent squares.

The characteristics of the hairspring according to the invention, for example its spring constant thermal sensitivity, can be better controlled.

Indeed thermal expansion of the graphitic domains tends mainly to increase the domain interlayer distances. When domains in the volume of the material are disordered however, the interlayer expansion is not fully compatible with the small, in-plane layer thermal contraction of the neighboring domains. The expected local anisotropic expansion thus becomes constrained and leads to the buildup of a thermal stress. This thermal stress can be relaxed the most in the regions of the material with the lowest stiffness, and those are presumably the interfaces and voids in-between the graphitic domains.

The thermal stress can increase or decrease the interface distances between the domains, thereby changing the local interface stiffnesses. The macroscopic consequence of changing the interface distances and stiffnesses in the nanostructured carbon with temperature, gives raise to the temperature sensitivity of the hairspring spring constant.

On the other hand, the pattern of the metamaterial made from slender edges **24** and vertices **23** also affects the macroscopic mechanical properties of the hairspring **12a** and the local deformation mechanism of the edges **24.**

Especially, the connectivity of the edges **24** in the metamaterial affects the ratio between the volume of the material of the structure that is under axial tensile/compressive or bending stress. Thus, the connectivity has the power to modify local elastic response of the edges **24** and with that the temperature sensitive spring constant of the hairspring **12a.**

In other words, nanostructured carbon has a particular mechanism responsible for the temperature sensitivity of the local elastic modulus. This mechanism is built-in into the microstructure of the material and is driven by the buildup of the thermal stress with temperature.

The temperature sensitivity of the intrinsic elastic modulus of the nanostructured carbon material is thus essentially a stress driven phenomenon. Therefore, in addition to be affected by the thermal stress that develops within the material when the temperature is changed, it can also be affected by any externally applied mechanical stress. In addition, local deformation mechanism and thus the local stress state of the hairspring **12a** made from the edges **24** depends on the connectivity of the edges **24** in the hairspring **12a.**

Now, by making the hairspring **12a** of connected edges **24** from nanostructured carbon, the temperature sensitivity of the hairspring **12a** spring constant depends on the temperature sensitivity of the edges elastic modulus that can further be modulated by the connectivity of the edges **24** in the metamaterial. Therefore, by controlling the properties of the individual edges **24** such as length, and thickness, and the connectivity of the edges **24** in the metamaterial, it is possible to better control the distribution of the local axial and bending stresses in the metamaterial, and with that, to better control the temperature sensitivity of the hairspring **12a** spring constant.

The hairspring **12a** may be manufactured by a method comprising for example the following steps:
a) a step of growing the forest of nanotubes **16,** during which the forest of nanotubes **16** is grown, generally on a substrate (not shown) such as a wafer of silicon or other,
b) an infiltration step, during which the component material of the matrix **16a** infiltrates the forest of nanotubes **16,**
c) a separation step during which the composite metamaterial is separated from the substrate.

During step a), it is advantageous to grow the forest of nanotubes **16** substantially perpendicularly to the substrate, which is arranged perpendicularly to the central axis **X.**

Step a) can be conducted for a time between 10 minutes and 40 minutes, at a temperature comprised between 650°C and 750°C.

The substrate is pretreated for example by photolithography, in a known manner, so that the growth of the forest of nanotubes **16** occurs at the exact locations desired, along the exact path of the metamaterial pattern of which the hairspring **12a** is made. Examples of controlled processes for the growing of nanotubes and the infiltration by a carbon matrix are given for example in the document "Mechanical and electrical properties of carbon-nanotube-templated metallic microstructures" by the author Richard Scott Hansen (June 2012), or in the Senior Thesis of Collin Brown (22 Apr. 2014) of Brigham Young University entitled "Infiltration of CNT forests by Atomic Layer Deposition for MEMS applications."

Infiltration of the carbon matrix **16a,** which is known per se, particularly from the above documents, generally takes place by vapor deposition. By acting on the infiltration time, one can affect the amount of infiltrated matrix between the nanotubes, which makes it very easy to change the mechanical properties of the hairspring **12a.**

Infiltration can be conducted for a time up to 6 hours, at a temperature of 850°C. The inventor observed that a 6-hour infiltration process leads to the formation of an outer capping layer of the infiltrated carbon present on the surface of the metamaterial edges **24.** The inventors observed a capping layer with a thickness comprised between 250 nm and 350 nm. The capping layer also influences the characteristics of the hairspring **12a.**

As represented in FIG. 8, the substrate **19** (silicon or other) may be covered with a first diffusion barrier layer (in particular silica) **20,** itself covered with the second diffusion barrier layer (in particular alumina) **21** and finally covered by a catalyst layer **22** (in particular iron) on which the forest of nanotubes **16** is grown. The layers that are patterned on the wafer, in particular, are the catalyst layer and the second diffusion barrier layer. After the separation step c), the infiltrated forest is separated from the catalyst and diffusion layers so that catalyst and diffusion layers are not integral part of the infiltrated forest.

During step c), the composite metamaterial can be separated from the substrate **19** by wet etching or preferably by vapor phase etching, in particular using hydrogen fluoride.

The hairspring **12a** obtained has many advantages:
- the hairspring **12a** can be created with sub-micron precision, with an orientation of the nanotubes **16** and a homogeneity that are fully controlled and reproducible, obtained by the process of nanotube growth and infiltration of the matrix into the forest of nanotubes **16,** resulting in exceptional timekeeping accuracy of the hairspring **12a;**
- the hairspring **12a** is particularly flexible in the plane perpendicular to the central axis **X;**
- the composite metamaterial has a low density, is non-magnetic, and is corrosion-resistant. Moreover, the composite metamaterial can have a low coefficient of thermal expansion. The composite metamaterial allows fine tuning of its thermo-mechanical properties through the material nanostructuring, resulting from the CVD processing parameters, and its design, i.e., the geometry of metamaterial patterns.

Moreover, the pattern of the metamaterial as well as the presence or not of the capping layer further influence the characteristics of the hairspring **12a,** especially its spring constant temperature sensitivity.

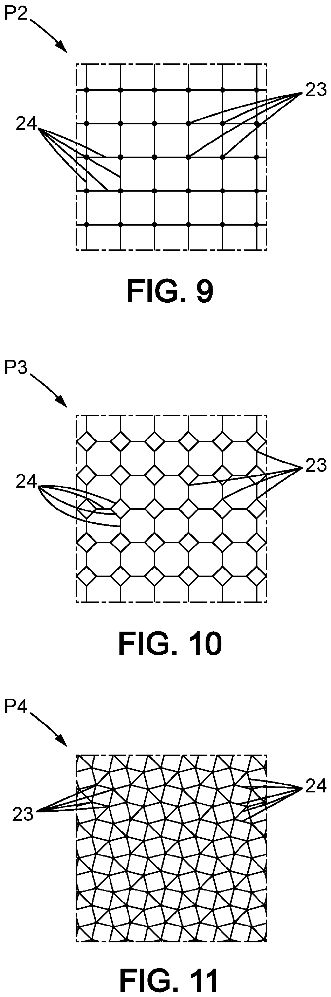

FIGS. 10 to 20 shows different patterns **P2** - **P12** of the metamaterial of which the hairspring **12a** can be made.

Pattern **P2** is substantially similar to the pattern **P1** shown on FIG. 7, except that the vertices **23** have a diameter which is larger than the thickness of the edges **24** thus forming spots at the intersections of the edges **24.**

Pattern **P3** shown in FIG. 11 forms truncated squares.

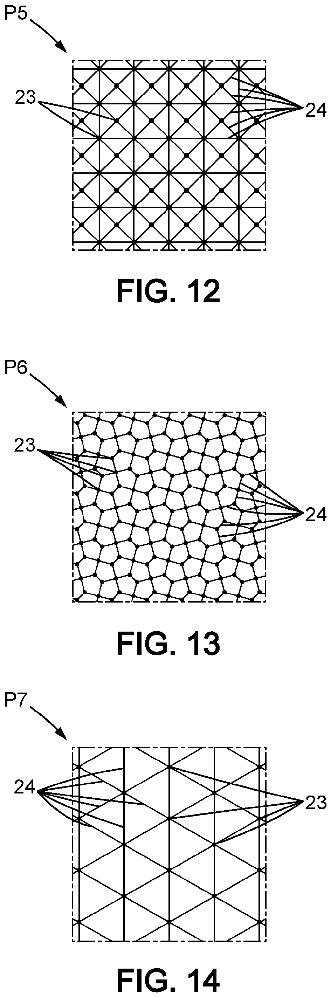

FIG. 12 shows a semiregular pattern **P4** known as a snub square tiling. In this pattern **P4,** five edges **24** extends from each vertex **23.** There are three triangles and two squares on each vertex **23.**

FIG. 13 shows a fifth pattern **P5** known as the tetrakis square tiling. This tiling is a square tiling with each square divided into four isosceles right triangles from the center point, forming an infinite arrangement of lines.

The sixth pattern **P6** illustrated on FIG. 14 is known as Cairo pentagonal tiling, which is a tessellation of a plane by congruent convex pentagons, formed by overlaying two tessellations of the plane by hexagons.

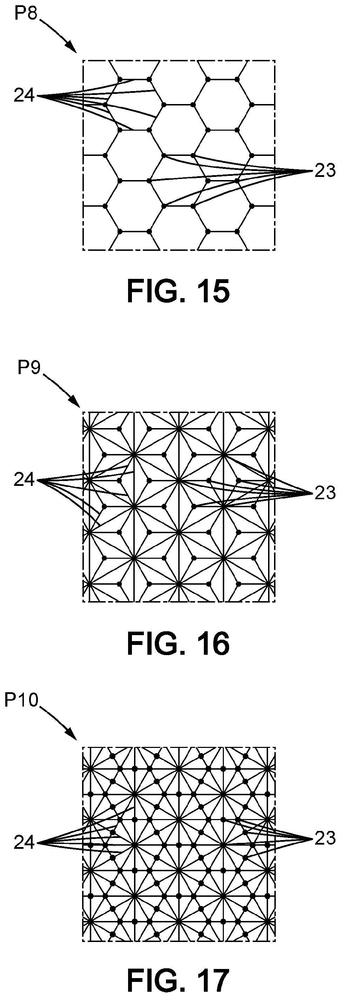

Pattern **P7** shown on FIG. 15 is comprised of identical triangles.

Pattern **P8** illustrated on FIG. 16 is comprised of identical hexagons.

FIG. 17 shows a further pattern **P9** known as triakis triangular tiling, which is an equilateral triangular tiling with each triangle divided into three obtuse triangles (angles 30-30-120) from the center point. Each isosceles triangle face has two types of vertices **23:** one with three triangles, and two with twelve triangles.

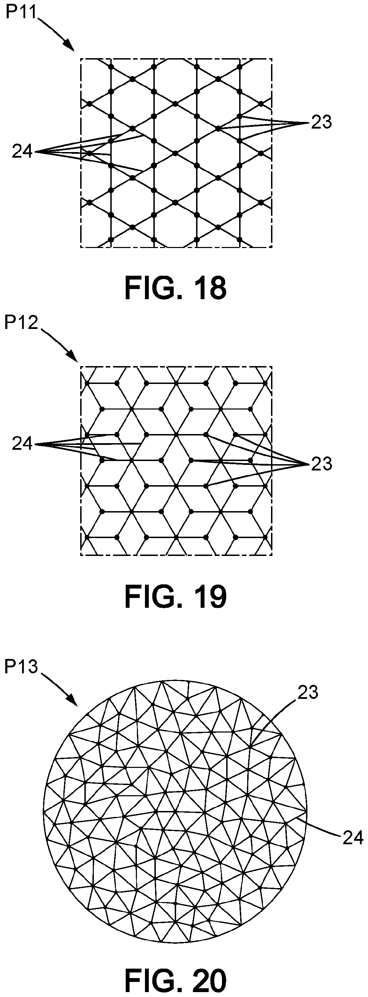

FIG. 18 illustrates a tenth pattern **P10** known as kisrhombile, which is uniform tiling of rhombic faces, divided by central points into four triangles.

An eleventh pattern **P11** is illustrated on FIG. 19. This eleventh pattern **P11** is known as trihexagonal tiling and consists of equilateral triangles and regular hexagons, arranged so that each hexagon is surrounded by triangles and vice versa. Two hexagons and two triangles alternate around each vertex **23,** and its edges **24** form an infinite arrangement of lines.

Twelfth pattern **P12** illustrated on FIG. 20 is knowns as rhombille tiling. This pattern **P12** consists of identical 60° rhombi on the plane. Each rhombus has two 60° and two 120° angles. Sets of three rhombi meet at their 120° angles and sets of six rhombi meet at their 60° angles.

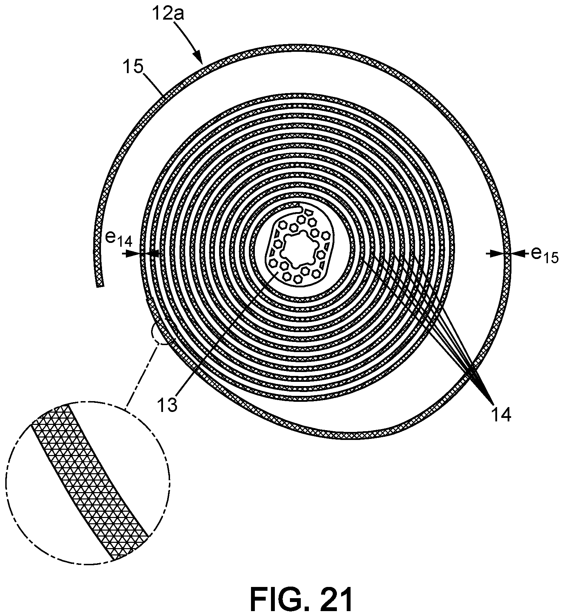

Thirteenth pattern **P13** illustrated on FIG. 21 is obtained by implementing a Delaunay triangulation algorithm to vertices **23** which are predefined. According to Delaunay triangulation algorithm, the edges **24** form triangles whose circumcircles do not contain any of the vertices **23.** As can be seen on FIG. 21, this thirteenth pattern **P13** is generally irregular - depending on the choice of the vertices **23** - as the triangles formed by the edges **24** are *a priori* all different.

Depending on the pattern **P1** - **P13** of the metamaterial of which the hairspring **12a** is made, each vertex **23** is connected to a different number of neighboring vertices **23** by respective edges **24.** For example, each vertex **23** is connected to 3 or more neighboring vertices **23,** especially to 3, 4, 5, 6, 8 or 12 neighboring vertices **23.** The connectivity of each vertex changes the local stress on the edges and the deformation mechanism in the metamaterial, especially in response to a change of the temperature of the metamaterial. For example, in a triangular pattern, edges **23** are mainly axially loaded while they are loaded in bending in a rectangular pattern. The Inventors further observed that the spring constant temperature sensitivity of the metamaterial was highly influenced by the connectivity of the vertices **23** in the metamaterial. For example, the inventor observed that a metamaterial of edges **24** arranged in triangular patterns has a significantly lower stiffness temperature sensitivity than a metamaterial made of identical edges **24** but arranged in rectangular patterns.

Moreover, the Inventors observed that when the edges **23** do not have a capping layer, the edges **23** have a smaller intrinsic temperature sensitivity, leading to a metamaterial having a smaller spring constant temperature sensitivity.

The invention is not limited to the examples described above, only by way of example, but the invention encompasses all the variants that a person skilled in the art may envisage within the context of the protection sought.

For example, as shown on FIG. 22, the turns **14** of the hairspring **12a** can have a first thickness **e₁₄** which is different from the thickness **e₁₅** of the terminal portion **15** of the hairspring **12a.** Especially, the terminal portion **15** of the hairspring **12a** can have a larger thickness **e₁₅** than the thickness **e₁₄** of the turns **14,** smaller for the spires and thicker for the terminal part.

Also, the metamaterial of the hairspring **12a** can have a same pattern in the turns **14** and in the terminal portion **15.** However, according to another example, the metamaterial of the hairspring **12a** can have a first pattern in the turns **14** and a second pattern in the terminal portion **15,** which is different from the first pattern, especially when the thickness of the turns **14** is different from the thickness of the terminal portion **15.** In this latter case especially, the pattern can be similar but larger or smaller.

## Claims

1. A hairspring (12a) for a hairspring-balance oscillator of a timepiece movement, comprising at least one flexible portion, said flexible portion being adapted to bend in a plane perpendicular to an axis (X) and being made of a metamaterial of structured nanotubes (16) of carbon bound in a matrix (16a) of amorphous carbon.

2. The hairspring according to claim 1, wherein the nanotubes (16) form a forest of nanotubes (16), the nanotubes being juxtaposed and generally arranged in parallel to the axis (X).

3. The hairspring according to claim 1 or 2, wherein the metamaterial has two-dimension unit cells, preferably only one or two two-dimension unit cells, formed by vertices (23) connected by edges (24).

4. The hairspring according to claim 3, wherein the two-dimension pattern is a uniform tiling.

5. The hairspring according to claim 3 or 4, wherein each vertex (23) is joined to at least three neighboring vertices (23) by respective edges (24).

6. The hairspring according to claim 5, wherein each vertex (23) is joined to exactly three, four, five, six, eight or twelve neighboring vertices (23) by respective edges (24).

7. The hairspring according to any of claims 3 to 6, wherein each edge (24) is covered by a capping layer, preferably of carbon.

8. The hairspring according to any of claims 3 to 7, wherein each edge (24) has a length comprised between 1 µm and 15 µm, preferably between 1 µm and 10 µm, and/or a thickness comprised between 500nm and 4 µm.

9. The hairspring according to any of the preceding claims, having a height (h) comprised between and/or a length comprised between 50 µm to 400 µm.

10. The hairspring according to any of the preceding claims, wherein the nanotubes (16) have a diameter comprised between 7 and 30 nm and/or a length comprised between 25 and 400 µm.

11. A timepiece movement having a hairspring (12a) according to any of the preceding claims.

12. A timepiece comprising a timepiece movement according to claim 11.

13. A method of manufacturing a hairspring according to any of claims 1 to 10, comprising the steps of:
a) a growing step of growing the forest of nanotubes (16) during which the forest of nanotubes (16) is grown;
b) an infiltration step, during which the component material of the matrix infiltrates the forest of nanotubes (16).

14. The method according to claim 13, wherein, during the growing step of growing the forest of nanotubes (16), the forest of nanotubes (16) is grown on a substrate, preferably perpendicularly to the substrate, and the infiltration step is followed by a separation step during which the composite metamaterial is separated from the substrate.

15. The method according to claim 13 or 14, wherein the infiltration step lasts up to 6 hours.
